# EUROPÄISCHE PATENTANMELDUNG

(11) **EP 1 018 474 A2**
(43) Veröffentlichungstag der Anmeldung: **12.07.2000**
(21) Anmeldenummer: 00100067.8
(22) Anmeldetag: 05.01.2000
(51) Int. Cl.: B65D 85/671, G06K 19/077, B65H 75/08

(54) **Laminatbahnrolle**

(30) Priorität: 04.01.1999 DE 19900086
(71) Anmelder: Sihl GmbH, 52355 Düren (DE)
(72) Erfinder: Liebler, Ralf, Dr., 52372 Kreuzau (DE); Högenett, Helmut, 52385 Niedeggen (DE)
(74) Vertreter: Sternagel, Fleischer, Godemeyer & Partner Patentanwälte

(57) **Zusammenfassung**

Bei einer Laminatbahnrolle mit einer Mehrzahl von auf der Laminatbahn (11) aufgebrachten Transpondern (12), wobei die Rolle einen länglichen Wickelkern (20) mit zwei Enden (21, 22) aufweist, ist zumindest ein Anlaufstück (30) an einem Ende (21) des Wickelkerns (20) als Teleskopierschutz und/oder Transportschutz der Laminatbahn (11) vorgesehen. Ein Anlaufstück (30) für insbesondere eine solche Laminatbahnrolle weist ein Mittel zum Verbinden mit einem Wickelkern einer Laminatbahnrolle (32, 35, 50, 60, 70, 90) und ein oder mehrere davon abstehende Elemente (31, 34, 43, 46, 80, 100) auf.

## Beschreibung

Die Erfindung betrifft eine Laminatbahnrolle mit einer Mehrzahl von auf der Laminatbahn aufgebrachten Transpondern, wobei die Rolle einen länglichen Wickelkern mit zwei Enden aufweist.

Es ist bekannt, Laminatbahnen zu Rollen gewickelt weiterzuverarbeiten. Die Weiterverarbeitung kann beispielsweise auch im Bedrucken mit einem Barcode bestehen. Anstelle der Bedruckung mit einem Barcode oder zusätzlich zu diesem können auf der Laminatbahn Transponder aufgefügt werden. Eine solche Laminatbahn ist in DE 693 13 776 T2 offenbart. Transponder bestehen aus einem Trägermaterial, auf dem eine Antennenspule sowie ein Schaltungschip angeordnet sind. Zumeist ist das Trägermaterial verhältnismäßig flexibel und biegsam, wohingegen der Schaltungschip aus einem recht starren Material besteht. Beim Aufwickeln der Laminatbahn mit den Transpondern sollte darauf geachtet werden, daß die jeweiligen Chips nicht zerstört werden. Besonders wichtig ist dies bei der Anwendung der Laminatbahn als Gepäck- bzw. Fluggepäckanhänger. Hierbei wird besonders darauf geachtet, daß die Transponder, insbesondere deren Chips, im wesentlichen 100%ig funktionieren, um zu verhindern, daß mit den Gepäckanhängern versehenes Gepäck nicht an den Zielort gelangt. Es sind dabei strenge Kontrollen vorgesehen, in denen die Transponder auf ihre Funktionsfähigkeit hin überprüft werden. Die Laminatbahn soll daher lediglich funktionstüchtige Transponder tragen. Aufgewickelt und mit Transpondern versehen gelangt sie dann z.B. zu den Flughäfen bzw. den entsprechenden Flugschaltern, wo die einzelnen Transponder vor Ort programmiert und Laminatbahnabschnitte mit Transpondern an dem Fluggepäck befestigt werden.

Da ein Aufwickeln der Laminatbahn zum späteren Einbringen der aufgewickelten Rolle z.B. in einen Thermodrucker zum Bedrucken mit einem Barcode erforderlich ist, wird vorzugsweise die Wicklung der Laminatbahnrolle auf dem Wickelkern mit geringerer Wickelspannung vorgesehen. Dadurch werden die zumeist aus Silicium bestehenden Chips der Transponder trotz ihrer Sprödigkeit davor bewahrt, zu brechen und den Transponder unbrauchbar zu machen. Dies führt jedoch zu dem Problem, daß die Handhabung der Laminatbahnrolle erschwert wird aufgrund der geringen Wickelspannung.

Der Erfindung liegt daher die Aufgabe zugrunde, dieses Problem zu lösen und insbesondere eine Laminatbahnrolle zu schaffen, die einen Teleskopierschutz und einen Transportschutz für die mit Transpondern versehene Laminatbahn vorsieht.

Die Aufgabe wird durch eine Einrichtung zum Aufwickeln nach dem Oberbegriff des Anspruchs 1 dadurch gelöst, daß zumindest ein an zumindest einem Ende des Wickelkerns vorgesehenes Anlaufstück als Teleskopierschutz und/oder Transportschutz der Laminatbahn vorgesehen wird. Weiterhin wird die Aufgabe durch ein Anlaufstück für insbesondere eine solche Laminatbahnrolle gelöst, das ein Mittel zum Verbinden mit einem Wickelkern einer Laminatbahnrolle und ein oder mehrere davon abstehende Elemente aufweist. Weiterbildungen der Erfindung sind in den jeweiligen abhängigen Ansprüchen definiert.

Dadurch wird eine Möglichkeit geschaffen, einen Schutz gegen das Teleskopieren der mit geringer Wickelspannung aufgewickelten Laminatbahn bei der Entnahme der Rolle aus einem Lieferkarton, der Bestückung eines Druckers oder des Druckvorgangs selbst zu erzielen. Zugleich wird ein Transportschutz während des Transports der Laminatbahnrolle beispielsweise in einem Lieferkarton geschaffen. Ein Beulen oder Einknicken der äußeren Ränder der aufgewickelten Laminatbahn tritt dadurch vorteilhaft nicht mehr auf. Außerdem ist die Laminatbahnrolle vorteilhaft an einem erfindungsgemäßen Anlaufstück besser angreifbar und kann dadurch leichter aus einem Lieferkarton herausgenommen werden.

Trommelflansche oder Spulen mit seitlichen Flanschen (GB 2278339 A) zum Aufwickeln von Gurtbändern (EP 0 693 452 A1), Garnen oder dgl. (DE 8531331.9 U1), flexiblen Leitungen (DE 92 13 241.3 U1) oder anderen flexiblen fortlaufenden Elementen (WO 95/26313 oder von Bändern von Magnetbandkassetten (DE 28 54 089 C3, US 5,180,116 A) sind bekannt. Die seitlichen Flansche begrenzen dabei jeweils die Wickelbreite der Spule oder Trommel, wobei das jeweilige Wickelgut fest auf den Wickelkern unter Vorsehen einer starken Zugspannung aufgewickelt ist. Die feste Wicklung verhindert dabei das Teleskopieren des Wickelguts und stellt bei dem genannten Wickelgut kein Problem dar. Lediglich die mit elektronischen Bauteilen versehenen Gurtbänder gemäß EP 0 693 452 A1 sind gegenüber starker Zugspannung empfindlich, weswegen dort ein weiterer Trommelkern als Zugentlastung vorgesehen ist, um eine Deformation der elektronischen Bauteile zu verhindern. Bei mit Transpondern versehenen Laminatbahnen werden diese, wie in DE 693 13 776 T2 offenbart, zumeist gefaltet, um eine Deformation der Transponder und von deren Chips zu vermeiden.

Die erfindungsgemäße Laminatbahnrolle wird demgegenüber vorzugsweise an beiden Enden mit dem Anlaufstück versehen. Dadurch wird die Laminatbahn beidseitig geführt und kann aus der vorgegebenen Bahn nicht herausgleiten. In bestimmten Fällen kann es jedoch hinderlich sein, an beiden Enden der Laminatbahnrolle ein Anlaufstück vorzusehen. Dieser Fall tritt beispielsweise beim Einlegen in einen Thermodrucker auf, bei dem das Druckbild dadurch verschoben werden kann, daß üblicherweise die Laminatbahnrolle an einer Seite anschlägt und damit geführt wird. Besonders bevorzugt wird daher die Laminatbahnrolle lediglich an einer Seite, hier insbesondere an der im Thermodrucker nicht angeschlagenen Seite, mit dem Anlaufstück versehen.

Vorzugsweise kann das erfindungsgemäße Anlaufstück auf seiner Außenseite beschriftet werden. Dabei wird beispielsweise der Typus der Laminatbahn und/oder Transponder auf dem Anlaufstück notiert. Eine Unterscheidung unterschiedlicher in einem Lieferkarton zusammen enthaltener Laminatbahnrollen kann ohne Herausnahme bereits bei Draufsicht auf die Beschriftung geschehen. Hierbei ist vorteilhaft kein weiteres Suchen nach Banderolen oder dergleichen mehr erforderlich, um herauszufinden, welches die gerade gewünschte richtige Laminatbahnrolle ist.

Vorteilhaft stützt das Anlaufstück die auf dem Wickelkern der Laminatbahnrolle aufgewickelte Laminatbahn durch ein oder mehrere über den Umfang des Wickelkerns hinausragende Mittel seitlich ab. Vorzugsweise weisen die abstehenden Elemente des Anlaufstücks einen Ring und Stege auf, die den Ring und ein Rumpfteil des Anlaufstückes als Mittel zum Verbinden mit dem Wickelkern miteinander verbinden, insbesondere in Form eines Speichenkranzes. Die von dem Rumpfteil abstehenden Elemente können aber auch fingerförmige, radial von dem Rumpfteil abstehende Erstreckungen sein. Besonders bevorzugt weist das Anlaufstück ein oder mehrere Scheiben, insbesondere Ringscheiben mit insbesondere veränderbarem Durchmesser auf. Ein solcher veränderbarer Durchmesser läßt sich beispielsweise durch Stanzungen oder Perforationen erzeugen. Die Scheiben können außerdem mit zumindest einer Rippe und/oder zumindest einem Steg versehen sein. Diese verleihen der Scheibe zusätzliche Festigkeit und Stabilität. Sind die von dem Rumpfteil des Anlaufstückes abstehenden Elemente so geformt, daß eine seitliche Draufsicht auf die aufgewickelte Laminatbahnrolle möglich ist, kann zugleich eine Sichtkontrolle von deren Füllgrad erfolgen.

Das bevorzugte Vorsehen von Scheiben mit veränderbarem Durchmesser gibt die Möglichkeit, derartige Anlaufstücke für Laminatbahnrollen mit unterschiedlichen Durchmessern zu verwenden. Außerdem kann eine Veränderung auch in Abhängigkeit von dem Füllgrad der Laminatbahnrolle erfolgen.

Vorzugsweise weist das Anlaufstück Mittel zum Verbinden auf, die an dem Ende oder den Enden des Wickelkerns der Laminatbahnrolle angreifen oder in diese eingreifen. Die Verbindung des Anlaufstückes mit dem Wickelkern kann formschlüssig und/oder reibschlüssig erfolgen. Alternativ hierzu kann das Anlaufstück aber auch einteilig mit dem Wickelkern vorgesehen werden. Besonders bevorzugt ist das Mittel zum Abstützen in Form des oder der abstehenden Elemente einstückig mit dem Mittel zum Verbinden des Anlaufstückes, wobei ebenso beide einstückig mit dem Wickelkern sein können. Hierbei ist der Wickelkern vorzugsweise an einem seiner Enden aufgeweitet und/oder so weit nach außen gebördelt, daß ein umlaufender abstehender Rand entsteht. Vorzugsweise ist der Wickelkern bei dieser Ausbildung rohrförmig. Andererseits kann er aber auch ein Vollkörper sein oder ein teilweise als Vollkörper und teilweise als Rohr gefertigter Körper. Das Profil des Wickelkerns ist vorzugsweise rund, kann jedoch auch jede beliebige andere Form annehmen, beispielsweise ein Vieleck sein.

Das Mittel zum Verbinden von Wickelkern der Laminatbahnrolle und den abstehenden Elementen des Anlaufstücks ist vorzugsweise das auf die Formgebung des Wickelkerns angepaßt geformte Rumpfteil des Anlaufstückes. Bevorzugt wird dieses auf den Wickelkern aufgesteckt. Es kann aber auch in diesen eingeschoben werden oder aber Rastnasen, Klemmeinrichtungen, Öffnungen zum Einrasten von entsprechenden Einrichtungen am Wickelkern und/oder ein oder mehrerer Auskragungen am Ende oder andere Mittel, die ein Verbinden ermöglichen, aufweisen. Besonders bevorzugt ist das Anlaufstück als Ringscheibe mit einer mittigen Öffnung ausgebildet, mittels derer die Ringscheibe auf den Wickelkern aufgesteckt werden kann. Vorzugsweise weist die Öffnung einen etwas geringeren Durchmesser auf als sich der Außendurchmesser des Wickelkerns bemißt.

Als vorteilhaft erweisen sich Anlaufstücke, die nach dem Gebrauch von einer Laminatbahnrolle auf die nächste aufgesteckt und mit dieser weiterverwendet werden können. Hierzu besteht das entsprechende Anlaufstück vorzugsweise aus einem verhältnismäßig festen Material, die Mittel zum Verbinden sind so ausgelegt, daß ein Abnehmen von dem Wickelkern der Laminatbahnrolle ohne Beschädigung möglich ist. Beispielsweise kann dadurch auch ein Austauschen des Anlaufstückes vor Ort geschehen, um die Laminatbahnrolle an eine spezielle Weiterverarbeitungsmaschine anzupassen. Hierzu kann beispielsweise ein Set von Anlaufstücken mit unterschiedlicher Formgebung einem Karton mit mehreren Laminatbahnrollen beigegeben werden.

Vorzugsweise bestehen das Mittel zum Verbinden, insbesondere das Rumpfteil und/oder das oder die abstehenden Elemente des Anlaufstückes aus Pappe, insbesondere Wellpappe, Kunststoff oder Metall. Der Wickelkern der Laminatbahnrolle ist insbesondere eine Hülse oder Rolle aus Pappe, Kunststoff oder ebenfalls Metall. Die Laminatbahn kann vorzugsweise Gepäckanhänger, insbesondere Fluggepäckanhänger, Zutrittskontrollscheine oder beliebige andere Etiketten enthalten, die mit Transpondern mit Schaltungschips oder mit ähnlichen aus sprödem, leicht zerstörbarem Material gefertigten Elementen versehen sind und mit geringer Wickelspannung auf einem Wickelkern aufgewickelt werden sollen.

Zur näheren Erläuterung der Erfindung werden im folgenden Ausführungsbeispiele anhand der Zeichnungen beschrieben. Diese zeigen in:
- Figur 1: eine perspektivische Ansicht einer ersten Ausführungsform einer erfindungsgemäß ausgestalteten Laminatbahnrolle mit einer mit Transponder versehenen Laminatbahn,
- Figur 2: eine perspektivische Ansicht einer zweiten und dritten Ausführungsform einer erfindungsgemäß ausgestalteten Laminatbahnrolle mit Anlaufstück,
- Figur 3: eine perspektivische Ansicht einer dritten Ausführungsform eines erfindungsgemäßen Anlaufstückes,
- Figur 4: eine vierte Ausführungsform eines erfindungsgemäßen Anlaufstückes,
- Figur 5: eine Schnittansicht einer fünften Ausführungsform eines erfindungsgemäßen Anlaufstückes,
- Figur 6: eine perspektivische Ansicht eines abstehenden Elementes für ein Anlaufstück in der Ausbildung nach Figur 5,
- Figur 7: eine perspektivische Ansicht einer sechsten Ausbildungsform eines erfindungsgemäßen Anlaufstückes und
- Figur 8: eine perspektivische Ansicht einer siebten Ausführungsform eines erfindungsgemäß ausgestalteten Anlaufstückes.

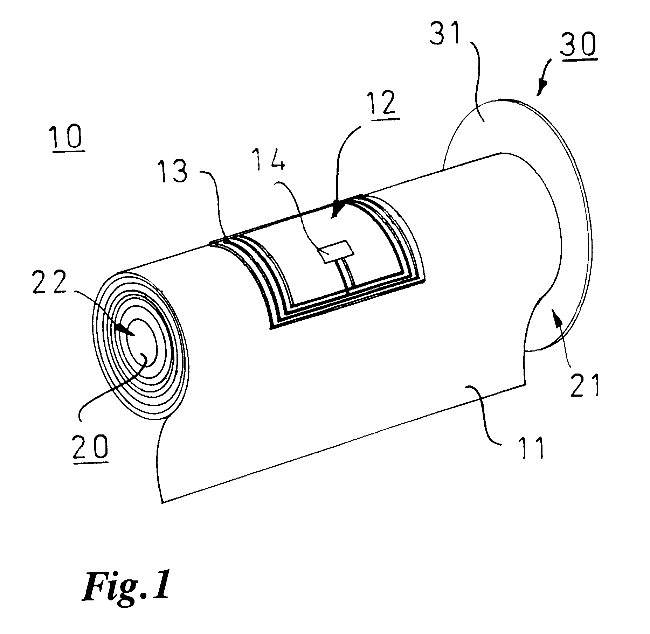

In Figur 1 ist eine perspektivische Ansicht einer ersten Ausführungsform einer erfindungsgemäß ausgestalteten Laminatbahnrolle 10 dargestellt. Auf die Laminatbahnrolle 10 ist eine Laminatbahn 11 aufgewickelt. Die Laminatbahn ist mit Transpondern 12 versehen. Diese weisen eine am äußeren Rand des Transponders umlaufende Antennenspule 13 sowie einen Schaltungschip 14 auf. Die Laminatbahn ist mit geringer Wickelspannung, das heißt locker, auf einen Wickelkern 20 der Laminatbahnrolle aufgewickelt. Der längliche Wickelkern 20 ist an seinem einen Ende 21 mit einem Anlaufstück 30 versehen.

Das Anlaufstück 30 weist ein sich über den Umfang des Wickelkerns 20 hinaus erstreckendes Element 31 in Form einer Scheibe auf.

Der längliche Wickelkern 20 der Laminatbahnrolle 10 kann ein Vollkörper oder ein rohrförmiges Element sein, wie es in Figur 1 gezeigt ist. Das rohrförmige Element kragt am Ende 21 in Form des abstehenden Elementes 31 als Scheibe aus. Diese Scheibe dient als Anlaufplatte für die aufgewickelte Laminatbahn, damit diese nicht teleskopiert und zudem ein Transportschutz beim Stapeln der einzelnen Laminatbahnrollen erzeugt wird. Außerdem kann die Rolle an dem abstehenden Element 31 leicht ergriffen und in ein Verarbeitungsgerät, wie beispielsweise einen Drucker, eingesetzt werden.

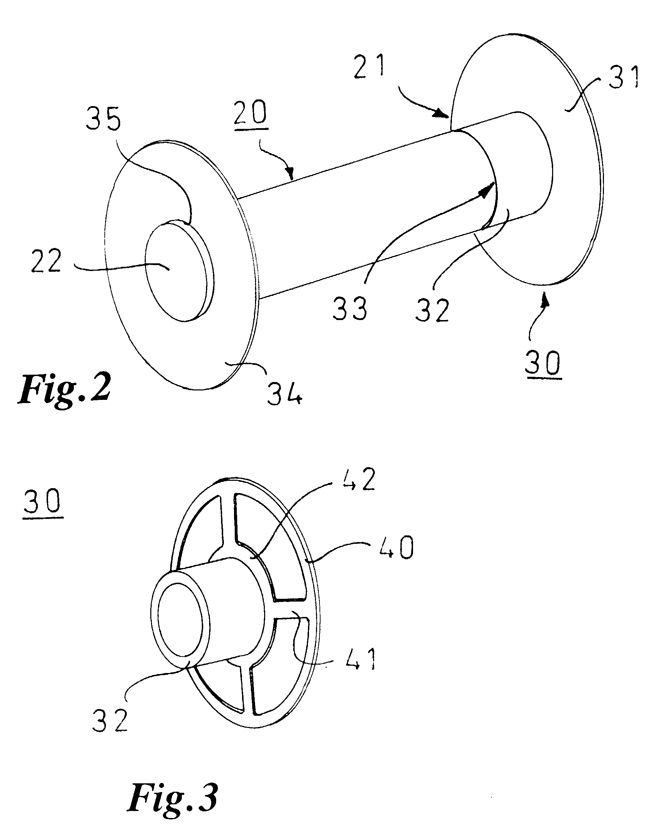

Eine andere Ausführungsform mit einem Wickelkern 20 als Vollkörper sowie einem von diesem abnehmbaren Anlaufstück 30 zeigt Figur 2 in einer perspektivischen Ansicht. Das Anlaufstück 30 ist auch hierbei wiederum mit einer Scheibe als abstehendem Element 31 versehen. Zum Verbinden mit dem Wickelkern 20 ist auf das Ende 21 des Wickelkernes reibschlüssig ein Rumpfteil 32 des Anlaufstückes 30 aufgeschoben. Das Rumpfteil ist in dieser Ausführungsform hülsenförmig. In das Innere der Hülse ist der Wickelkern 20 eingeschoben. Um einen kontinuierlichen Übergang von der Oberfläche des Wickelkerns 20 zur Oberfläche des Rumpfteils 32 des Anlaufstückes 30 zu schaffen, ist in dem dargestellten Fall das Ende 21 des Wickelkerns mit einem geringeren Durchmesser versehen als dem Außendurchmesser des hülsenförmigen Rumpfteils entspräche. Alternativ hierzu kann aber auch das Rumpfteil mit einer abgeschrägten vorderen Kante 33 versehen sein. Sofern das Rumpfteil selbst aus einem verhältnismäßig dünnen Material in Form einer Hülse gefertigt ist, wird die aufgewickelte Laminatbahn nur unwesentlich an dieser Stelle nach außen gewölbt. Hierbei sollte darauf geachtet werden, daß durch diese leichte Wölbung keine Schrägstellung der Wicklung der Laminatbahn erzeugt wird. Eine derartige Schräglage der Wicklung könnte nämlich das Teleskopieren der Laminatbahnrolle begünstigen.

Anstelle des Rumpfteils kann lediglich eine mittige Öffnung 35 in einem abstehenden scheibenförmigen Element 34 vorgesehen sein. Diese Variante ist am anderen Ende 22 des Wickelkerns 20 angedeutet. Der Wickelkern ist vorzugsweise wenige Millimeter, z.B. 3 bis 6 mm, länger als sich die Breite der Laminatbahn bemißt, um genügend Platz für das Auffügen des Elementes 34 zu haben. Vorzugsweise ist der Durchmesser der Öffnung 35 etwas geringer als der Außendurchmesser des Wickelkerns, um einen festen Halt auf dem Wickelkern zu ermöglichen. Vor dem Aufwickeln der Laminatbahn auf den Wickelkern, um die Rolle zu erhalten, wird das scheibenförmige Element 34 auf den Wickelkern aufgeschoben. Aufgrund der genannten Abmessungen hält das scheibenförmige Element 34 auf dem Wickelkern durch Reibung fest. Bevorzugt besteht zumindest das Element 34 aus Pappe bzw. Wellpappe, um diese Wirkung noch zu verstärken.

Alternativ zum Aufschieben des Anlaufstückes 30 auf den Wickelkern 20 kann das Rumpfteil 32 des Anlaufstückes 30 auch in einen rohrförmigen Wickelkern 20, wie in Figur 1 gezeigt, eingeschoben werden. Eine solche Variante zeigt auch Figur 3. Hierbei weist das in perspektivischer Ansicht dargestellte Anlaufstück 30 ein hülsenförmiges Rumpfteil mit großer Wandstärke auf. Vorzugsweise wird der Wickelkern auf das Rumpfteil aufgeschoben, kann jedoch auch in die innere Öffnung des hülsenförmigen Rumpfteils eingeschoben werden.

Als abstehendes Element 31 weist das in Figur 3 dargestellte Anlaufstück 30 einen äußeren Ring 40, Stege 41 und einen inneren Ring 42 auf. Die Stege 41 verbinden den äußeren Ring und den inneren miteinander. Der innere Ring ist vorzugsweise einstückig mit dem Rumpfteil 32. Beispielsweise ist das Anschlußstück als Kunststoffgußteil gefertigt und das abstehende Element einteilig mit an das Rumpfteil angeformt.

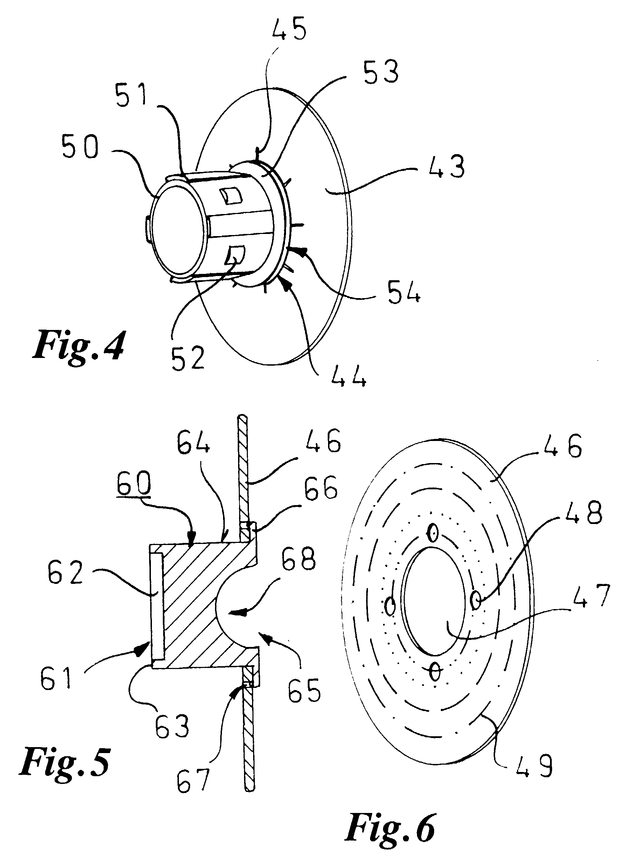

Figur 4 zeigt eine weitere Ausführungsform eines erfindungsgemäß ausgestalteten Anlaufstückes. Hierbei ist das Rumpfteil mit Klemmeinrichtungen versehen. Das Rumpfteil weist hierbei einen hülsenförmigen Körper 50 sowie zungenförmige Klemmeinrichtungen 51 auf. Zwischen den auf dem Umfang des hülsenförmigen Elementes 50 verteilten vier Klemmeinrichtungen 51 sind auf der Außenfläche des hülsenförmigen Elementes abstehende Haltenasen 52 ausgeformt.

Ein rohrförmiger Wickelkern kann zwischen Klemmeinrichtungen und hülsenförmigem Element eingeschoben werden. Die Klemmeinrichtungen drücken den Wickelkern mit seiner Innenfläche auf die Außenfläche des hülsenförmigen Elementes und die darauf befindlichen Haltenasen. Dadurch hält der Wickelkern besonders gut und fest an dem Rumpfteil des Anlaufstückes fest. Eine andere Möglichkeit besteht darin, den rohrförmigen Wickelkern, sofern der Durchmesser etwa dem Außendurchmesser der Klemmeinrichtungen auf dem hülsenförmigen Element entspricht, über die Klemmeinrichtungen zu schieben. Aufgrund der zungenförmigen Klemmeinrichtungen und deren seitlicher Kanten wird der Wickelkern ebenfalls festgehalten. Vorzugsweise ist das Rumpfteil zumindest mit einem Bereich versehen, der einen solchen Durchmesser aufweist, daß dieser dem Außen- und/oder Innendurchmesser des Wickelkerns der Laminatbahnrolle angepaßt ist.

Bei der in Figur 4 dargestellten Ausführungsform kann eine Variation des Rumpfteilaußendurchmessers dadurch erzielt werden, daß Haltenasen 52 und/oder Klemmeinrichtungen 51 in ihrer radialen Erstreckung weg von dem hülsenförmigen Element 50 variiert werden. Um durch die Klemmeinrichtungen einen größeren Außendurchmesser zu erzielen, kann auch auf das hülsenförmige Element unter die Klemmeinrichtungen eine weitere Hülse eingeschoben werden, wodurch diese einen größeren Außendurchmesser beschreiben. Auf diesen kann dann wiederum ein Wickelkern in Hülsenform mit größerem Innenradius bzw. Innendurchmesser aufgesteckt werden.

In der in Figur 4 dargestellten Ausführungsform weist das hülsenförmige Element 50 ein auskragendes Ende 53 auf. Dieses ist mit einer umlaufenden Nut 54 versehen. In diese Nut 54 ist ein ringscheibenförmiges Element 43 mit einer inneren Öffnung 44 und Einschnitten 45 eingesteckt. Hierbei ist das ringscheibenförmige Element 43 auswechselbar, beispielsweise wenn eine Variation im Durchmesser dieses Elementes erwünscht ist. Rumpfteil und ringscheibenförmiges Element können aus unterschiedlichen Materialien bestehen, beispielsweise besteht das ringscheibenförmige Element aus einem biegsamen Material wie Pappe und das Rumpfteil aus einem stabilen Material wie Kunststoff oder Metall.

Eine weitere Ausführungsform eines erfindungsgemäßen Anlaufstückes zeigt Figur 5 in einer Schnittansicht. Hierbei ist das Rumpfteil 32 als Vollkörper gefertigt. Das Rumpfteil weist auf seiner Frontseite 61 eine innere Ausnehmung 62 auf. Diese wird auf ihrer Außenseite am Umfang des Rumpfteils 60 von einem ringförmig umlaufenden Rand 63 begrenzt.

Ein rohrförmiger Wickelkern 20 der Laminatbahnrolle kann entweder auf der Außenfläche 64 des Rumpfteils 60 oder innerhalb der inneren Ausnehmung 62 aufgeschoben bzw. eingeschoben werden.

Das Rumpfteil 60 weist auf seiner der Frontseite abgeneigten Rückseite 65 einen umlaufenden abstehenden Rand 66 auf. Im Bereich seiner äußeren Kante ist der umlaufende abstehende Rand 66 mit punktförmigen Erhebungen 67 versehen. Die punktförmigen Erhebungen können auch eine andere Form aufweisen, sollten jedoch geeignet sein, um in entsprechende Öffnungen innerhalb eines ringscheibenförmigen Elementes 46 eingreifen zu können. Ein solches ringscheibenförmiges Element ist in der perspektivischen Ansicht in Figur 6 gezeigt.

Das ringscheibenförmige Element 46 weist im Bereich seiner inneren Öffnung 47 vier weitere kleine Öffnungen 48 zum Eingreifen der punktförmigen Erhebungen des Rumpfteils 60 auf.

Das in den Figuren 5 und 6 dargestellte Anlaufstück ist also, ebenso wie das in Figur 4 dargestellte, zweiteilig. Bei der Ausführungsform gemäß Figur 5 sollte das ringscheibenförmige Element jedoch auf das Rumpfteil aufgefügt werden, bevor dieses mit dem Wickelkern 20 verbunden wird. Zum besseren Aufstecken bzw. Einstecken des Rumpfteiles 60 in den Wickelkern weist das Rumpfteil auf seiner Rückseite 65 eine Mulde 68 auf. Diese Mulde ist optional, erleichtert jedoch die Handhabung des Rumpfteiles bzw. des gesamten Anlaufstückes.

Um einen veränderbaren Durchmesser beispielsweise zum Anpassen an unterschiedliche Wickeldurchmesser der Laminatbahn zu erzeugen, ist das ringscheibenförmige Element 46 mit Perforationslinien 49 versehen. Der besseren Deutlichkeit wegen sind sie teilweise punktiert, teilweise strichpunktiert und teilweise lediglich gestrichelt dargestellt.

Das Rumpfteil kann beispielsweise auch in Form von Rippen vorgesehen werden, die in gleichmäßigem Abstand zueinander eine Aufnahme einbeschreiben, in die der Wickelkern eingeschoben werden kann oder so zueinander angeordnet sind, daß der Wickelkern auf das rippenartige Rumpfteil aufgeschoben werden kann.

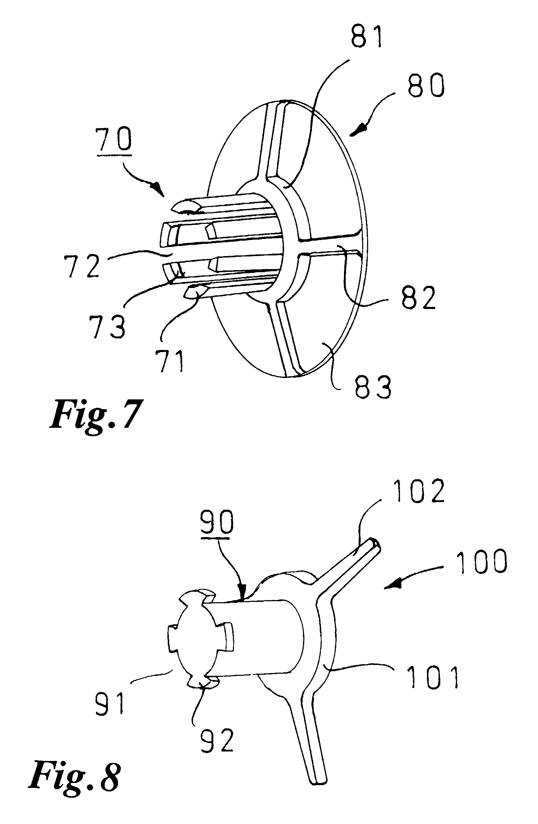

Eine solche Lösung ist in Figur 7 gezeigt. Das Rumpfteil 70 ist dabei in Form von Rippen 71 aufgebaut. Zwischen den einzelnen Rippen 71 sind dabei Zwischenräume 72 belassen, damit eine Variation des umschriebenen bzw. einbeschriebenen Durchmessers durch die Rippen ermöglicht wird. Im frontseitigen Bereich der Rippen sind diese mit einem jeweiligen Absatz 73 versehen. Sollen die Rippen 71 einen Wickelkern von außen umgreifen, kann das eine Ende des Wickelkerns auf den Absätzen 73 aufgestützt werden.

Zu einem scheibenförmigen abstehenden Element 80 hin sind die Rippen 71 in einen Ring 81 eingefaßt. Von dem Ring 81 ausgehend erstrecken sich radial Rippen 82. Der Ring 81 und die Rippen 82 werden von einem Scheibenelement 83 unterstützt. Vorzugsweise ist das Scheibenelement 83 einteilig mit Ring und Rippen, insbesondere als Gußteil ausgebildet. Das Scheibenelement 83 kann aber auch auf entsprechend vorgesehene Erhebungen auf der von dem Rumpfteil abgewandten Seite der Rippen und des Ringes aufgesteckt sein. Bei der mehrteiligen Lösung kann das Scheibenelement ausgetauscht werden, wohingegen Rumpfteil und abstehendes Element in Form von Ring und Rippen wiederverwendet werden können.

In Figur 8 ist eine weitere Ausführungsform eines erfindungsgemäßen Anlaufstückes gezeigt. Das Anlaufstück weist ein Rumpfteil 90 als Vollkörper aus. An seinem frontseitigen Ende 91 sind radial abstehende Halteelemente 92 am äußeren Umfang angeordnet. Das Rumpfteil 90 ist ansonsten ein Vollkörper und erstreckt sich bis zu einem Ringelement 101 eines abstehenden Elementes 100. Von dem Ringelement erstrecken sich radial nach außen drei fingerförmige Erstreckungen 102. Anstelle der drei fingerförmigen Erstreckungen können sogar lediglich zwei einander vorzugsweise gegenüberliegende Erstreckungen 102 an dem Ringelement 101 angeordnet werden. Wahlweise können aber auch mehr als drei fingerförmige Erstreckungen über den Umfang des Ringelementes 101 verteilt vorgesehen werden.

Anstelle der in den Figuren 1 bis 8 beschriebenen Ausführungsformen von Anlaufstücken können auch beliebige Kombinationen der beschriebenen abstehenden Elemente mit oder ohne Rumpfteilen vorgesehen werden. Außerdem sind im Rahmen der Erfindung auch zahlreiche weitere Ausführungsformen der Anlaufstücke möglich. Beispielsweise kann auch das von dem Rumpfteil abstehende Element die Form eines Speichenkranzes aufweisen. In jedem Falle sollte das Mittel zum Verbinden von Anlaufstück und Wickelkern, insbesondere das Rumpfteil geeignet sein, den Wickelkern entweder in sich aufzunehmen oder aber diesen übergreifen zu können und an ihm festzuhalten. Das abstehende Element sollte zum seitlichen Abstützen der aufgewickelten Laminatbahn geeignet sein, um einen Transport- und Teleskopierschutz für die Laminatbahn, die mit geringer Wickelspannung aufgewickelt ist, erzeugen zu können. Auch die einteilige Form von Anlaufstück und Wickelkern, bei der ein separates Mittel zum Verbinden beider nicht erforderlich ist, kann mit beliebig gestalteten abstehenden Elementen vorgesehen werden.

Insbesondere die scheiben- oder ringscheibenförmigen abstehenden Elemente können mit Bedruckungen und Beschriftungen auf ihrer vom Wickelkern wegweisenden Seite versehen werden. Die Beschriftungen oder Bedruckungen betreffen hierbei vorzugsweise Typenbezeichnungen der Laminatbahn bzw. Transponder, der Lauflänge, Anzahl der auf der Laminatbahn vorgesehenen Transponder etc. Auch Material angaben können hier sichtbar aufgedruckt werden. Beispielsweise können auf derartigen ringscheiben- oder scheibenförmigen abstehenden Elementen Langlöcher vorgesehen werden, die sich radial von der Mitte aus erstrecken. Hierbei ist eine Sichtkontrolle des Füllgrades der Laminatbahnrolle gegeben. An solchen Langlöchern können auch weitere Beschriftungen vorgesehen werden, die den Füllgrad der Laminatbahnrolle angeben.

Zusätzlich zu den beschriebenen und dargestellten weiteren Ausgestaltungen können auch an dem Wickelkern und dem Anlaufstück anwendungsspezifisch besondere Ausgestaltungen vorgenommen werden.

### Bezugszeichenliste

- 10: Laminatbahnrolle
- 11: Laminatbahn
- 12: Transponder
- 13: Antennenspule
- 14: Schaltungschip

- 20: länglicher Wickelkern
- 21: erstes Ende
- 22: zweites Ende

- 30: Anlaufstück
- 31: abstehendes Element
- 32: Rumpfteil
- 33: abgeschrägte vordere Kante
- 34: ringscheibenförmiges Element
- 35: mittige Öffnung

- 40: äußerer Ring
- 41: Stege
- 42: innerer Ring
- 43: ringscheibenförmiges Element
- 44: innere Öffnung
- 45: Einschnitte
- 46: ringscheibenförmiges Element
- 47: innere Öffnung
- 48: kleine Öffnungen
- 49: Perforationslinien

- 50: hülsenförmiges Element
- 51: Klemmeinrichtungen
- 52: Haltenasen
- 53: auskragendes Ende
- 54: Nut

- 60: Rumpfteil
- 61: Frontseite
- 62: innere Ausnehmung
- 63: ringförmig umlaufender Rand
- 64: Außenfläche
- 65: Rückseite
- 66: umlaufender abstehender Rand
- 67: punktförmige Erhebung
- 68: Mulde

- 70: Rumpfteil
- 71: Rippen
- 72: Zwischenraum
- 73: Absätze

- 80: abstehendes Element
- 81: Ring
- 82: Rippen
- 83: Scheibenelement

- 90: Rumpfteil
- 91: frontseitiges Ende
- 92: Halteklötze

- 100: abstehendes Element
- 101: Ringelement
- 102: fingerförmige Erstreckungen

## Patentansprüche

1. Laminatbahnrolle mit einer Mehrzahl von auf der Laminatbahn (11) aufgebrachten Transpondern (12), wobei die Rolle einen länglichen Wickelkern (20) mit zwei Enden (21, 22) aufweist,
gekennzeichnet durch
zumindest ein an zumindest einem Ende (21) des Wickelkerns (20) vorgesehenes Anlaufstück (30) als Teleskopierschutz und/oder Transportschutz der Laminatbahn (11).

2. Laminatbahnrolle nach Anspruch 1,
dadurch gekennzeichnet, daß
das Anlaufstück (30) die auf dem Wickelkern (20) aufgewickelte Laminatbahn (11) durch ein oder mehrere über den Umfang des Wickelkerns hinausragende Mittel (31, 34, 43, 46, 80, 100) seitlich abstützt.

3. Laminatbahnrolle nach Anspruch 1 oder 2,
dadurch gekennzeichnet, daß
das Anlaufstück über Mittel (32, 35, 50, 60, 70, 90) zum Verbinden an dem Ende (21) oder den Enden des Wickelkerns (20) angreift oder in diese eingreift.

4. Laminatbahnrolle nach einem der Ansprüche 1 bis 3,
dadurch gekennzeichnet, daß
das Anlaufstück (30) an dem Wickelkern formschlüssig und/oder reibschlüssig befestigt ist.

5. Laminatbahnrolle nach Anspruch 1 oder 2,
dadurch gekennzeichnet, daß
zumindest ein Teil des Anlaufstücks (30) und der Wickelkern (20) der Laminatbahnrolle (10) einstückig ausgebildet sind, insbesondere das Mittel zum Abstützen mit dem Wickelkern der Laminatbahnrolle einteilig und durch ein auskragendes Ende (21) des Wickelkerns (20) gebildet ist.

6. Laminatbahnrolle nach Anspruch 3 oder 4,
dadurch gekennzeichnet, daß
Mittel zum Verbinden ein auf die Formgebung des Wickelkerns angepaßt geformtes Rumpfteil (32) oder eine angepaßt geformte Öffnung (35) des Anlaufstücks ist.

7. Laminatbahnrolle nach einem der vorstehenden Ansprüche,
dadurch gekennzeichnet, daß
Mittel (31, 34) zum Abstützen einstückig mit dem Mittel (32) zum Verbinden sind oder daß Mittel zum Abstützen und die Mittel zum Verbinden mehrteilig sind.

8. Laminatbahnrolle nach einem der vorstehenden Ansprüche,
dadurch gekennzeichnet, daß
der Wickelkern (20) zumindest teilweise rohrförmig oder ein Vollkörper ist.

9. Laminatbahnrolle nach einem der Ansprüche 1 bis 4,
dadurch gekennzeichnet, daß
der Wickelkern (20) der Laminatbahnrolle (10) ein auskragendes Ende aufweist, auf das ein Mittel (46) zum Abstützen aufgefügt ist.

10. Laminatbahnrolle nach einem der vorstehenden Ansprüche,
dadurch gekennzeichnet, daß
die Laminatbahn (11) Gepäckanhänger, insbesondere Fluggepäckanhänger enthält.

11. Anlaufstück (30), insbesondere für eine Laminatbahnrolle nach einem der Ansprüche 1 bis 10,
gekennzeichnet durch
ein Mittel zum Verbinden mit einem Wickelkern einer Laminatbahnrolle (32, 35, 50, 60, 70, 90) und ein oder mehrere davon abstehende Elemente (31, 34, 43, 46, 80, 100).

12. Anlaufstück nach Anspruch 11,
dadurch gekennzeichnet, daß
das Mittel zum Verbinden eine von dem oder den abstehenden Elementen begrenzte Öffnung und/oder ein hülsenförmiges und/oder rippenartiges Rumpfteil des Anlaufstücks (30) und/oder ein Vollkörper ist.

13. Anlaufstück nach Anspruch 11 oder 12,
dadurch gekennzeichnet, daß
das Mittel zum Verbinden zumindest einen Bereich mit einem Durchmesser aufweist, der auf den Außen- und/oder Innendurchmesser des Wickelkerns der Laminatbahnrolle angepaßt ist, insbesondere der Durchmesser der Öffnung (35) oder der Innendurchmesser des Rumpfteils etwas geringer als der Außendurchmesser des Wickelkerns (20) der Laminatbahnrolle ist.

14. Anlaufstück nach einem der Ansprüche 11 bis 13,
dadurch gekennzeichnet, daß
das Mittel zum Verbinden mit zumindest einer Klemmeinrichtung (51) zum klemmenden Verbinden mit dem Wickelkern der Laminatbahnrolle versehen ist.

15. Anlaufstück nach einem der Ansprüche 12 bis 14,
dadurch gekennzeichnet, daß
das Mittel zum Verbinden in Ausbildung als Rumpfteil ein auskragendes Ende (53) und/oder Haltenasen (52) an einem Ende zum Festhalten in zumindest einer Öffnung (47) in dem oder den abstehenden Elementen (46) aufweist, insbesondere die Mittel zum Verbinden in Form des Rumpfteils (60) mit einer Ausnehmung (62) mit einem am Umfang des Rumpfteils ringförmig umlaufenden Rand (63) an der von den abstehenden Elementen abgewandten Frontseite (61) versehen ist.

16. Anlaufstück nach einem der Ansprüche 11 bis 15,
dadurch gekennzeichnet, daß
das oder die abstehenden Elemente eine oder mehrere Scheiben und/oder ringscheibenförmige Elemente (34, 43, 46) mit insbesondere veränderbarem Durchmesser sind, insbesondere die Scheibe oder Scheiben oder ringscheibenförmigen Elemente (46) zum Erzeugen veränderbarer Durchmesser vorgestanzt und/oder perforiert sind.

17. Anlaufstück nach Anspruch 16,
dadurch gekennzeichnet, daß
das Mittel zum Verbinden als mittige Öffnung (35) in dem ringscheibenförmigen abstehenden Element (34) ausgebildet ist.

18. Anlaufstück nach einem der Ansprüche 11 bis 15,
dadurch gekennzeichnet, daß
die von dem Mittel zum Verbinden abstehenden Elemente zumindest einen äußeren Ring (40) und Stege (41) aufweisen, die im wesentlichen radial zum äußeren Ring laufen, insbesondere in Form eines Speichenkranzes und/oder die abstehenden Elemente (100) zumindest zwei fingerförmige, radial abstehende Erstreckungen (102) sind.

19. Anlaufstück nach einem der Ansprüche 16 bis 18,
dadurch gekennzeichnet, daß
die abstehenden Elemente mit zumindest einer Rippe (82) und/oder zumindest einem Steg versehene Scheibenelemente (83) sind.

20. Anlaufstück nach einem der Ansprüche 11 bis 19,
dadurch gekennzeichnet, daß
das Mittel zum Verbinden, insbesondere in Form des Rumpfteils und/oder das oder die abstehenden Elemente aus Pappe, insbesondere Wellpappe, Kunststoff oder Metall bestehen.
